# EUROPÄISCHE PATENTSCHRIFT

(11) **EP 1 105 301 B1**
(45) Veröffentlichungstag und Bekanntmachung des Hinweises auf die Patenterteilung: **28.05.2003**
(21) Anmeldenummer: 99952367.3
(22) Anmeldetag: 11.08.1999
(51) Int. Cl.: B60M 1/24, H02G 7/08

(54) **SEILKLEMME, INSBESONDERE RICHTSEIL- ODER TRAGSEILKLEMME FÜR TRAGWERKE VON OBERLEITUNGEN**
CABLE CLAMP, ESPECIALLY A CROSS-SPAN ADJUSTER CLAMP OR BEARER CABLE CLAMP FOR SUPPORTING FRAMEWORKS OF CATENARY SYSTEMS
PINCE DE CABLE, NOTAMMENT PINCE DE CABLE DIRECTEUR OU DE CABLE PORTEUR POUR SYSTEMES PORTEURS DE CATENAIRES

(30) Priorität: 19.08.1998 DE 19837629
(43) Veröffentlichungstag der Anmeldung: 13.06.2001
(73) Patentinhaber: SIEMENS AKTIENGESELLSCHAFT, 80333 München (DE)
(72) Erfinder: GANSHORN, Rolf-Dieter, D-68169 Mannheim (DE); LERAY, Philippe, D-67061 Ludwigshafen (DE)
(86) Internationale Anmeldenummer: DE9902515
(87) Internationale Veröffentlichungsnummer: WO00010832

(56) Entgegenhaltungen:
- DE-B- 1 272 957
- DE-C- 700 147
- DE-U- 7 120 758
- FR-A- 2 564 647

## Beschreibung

Die Erfindung betrifft eine Seilklemme entsprechend dem Oberbegriff des Patentanspruches 1, die insbesondere als Richtseil- oder als Tragseilklemme in Tragwerken von Oberleitungen elektrischer Bahnen eingesetzt wird.

Bei verschiedenen Anwendungen, insbesondere im Fahrleitungsbau zum Aufhängen und Spannen von Fahrdrähten und Tragseilen stellt sich die Forderung, die Montage und Justage der dort eingesetzten Seilklemmen schneller und einfacher durchführen zu können.

Bekannte Seilklemmen, wie sie beispielsweise als Richtseiloder Tragseilklemmen eingesetzt werden, um Fahrdrahtseitenhalter, Bogenabzüge, Hakenkloben und Kauschen an den Quertragwerken zu befestigen, sind vergleichsweise umständlich zu montieren und justieren. Um die Seilklemme auf das Richtseil zu setzen, ist es notwendig, zunächst mehrere Schraubverbindungen zu lösen und diese mindestens teilweise ganz zu entfernen. Nach dem Setzen der Seilklemme müssen dann zunächst die losen Teile montiert werden. Um die Seilklemme auf dem Richtseil zu arretieren, müssen danach die Schrauben gleichmäßig angezogen und anschließend mit Muttern gekontert werden. Insbesondere unter Last ist eine solche Richtseilklemme nur mit hohem Montageaufwand nachjustierbar.

Aus US 3 437 299 ist eine Seilklemme bekannt, welche an horizontal montierten Isolatoren befestigt wird. Die Seilklemme umfaßt drei auf einem Gewindebolzen aufsetzbare Klemmkörper. Mit dem unteren und der Unterseite des mittleren Klemmkörpers wird der Isolator festgeklemmt, mit dem oberen und der Oberseite des mittleren Klemmkörpers läßt sich das Seil festklemmen. Die Oberseite des mittleren Klemmkörpers ist so ausgebildet, daß eine das Seil teilweise an seiner Unterseite umgreifende Klemmschale gebildet wird, auf der das Seil aufliegen kann. Der obere Klemmkörper bildet das Gegenstück zur Klemmschale und ist als Klemmdeckel entsprechend ausgebildet. Die Befestigung am Gewindebolzen erfolgt mittels einer lösbaren Feststellmutter, wodurch sich die Klemmverbindung aus einer das Seil festklemmenden in eine das Seil freigebenden Position verstellen läßt. Beim Lösen der Feststellmutter kippt der Klemmdeckel entgegen der Freigaberichtung nach hinten und gibt das Seil frei. Das Seil hat also bei gelöster Feststellmutter keinen Halt mehr in der Seilklemme.

Aus FR 1 025 428 ist eine Doppelseilklemme bekannt, bei der Klemmschale und Klemmdeckel jeweils mit einem wellenförmigen, die Klemmwirkung verstärkenden Profil versehen sind.

Aus DE-GM 7 120 758 ist eine Abspannklemme für Metall- und Kunststoffseile bekannt, die insbesondere für die Aufhängung von Fahrdrähten am Oberleitungstragwerk elektrischer Bahnen vorgesehen ist. Es wird eine als Hängerklemme ausgebildete Ausführung gezeigt, bei der ein das Seil ebenfalls teilweise, jedoch nur seitlich umgreifendes Klemmunterteil und ein dazu korrespondierend angeordneter Klemmdeckel vorhanden sind. Das seitliche Umgreifen des Seiles ist mit dem Nachteil behaftet, daß bei Lösen der Verbindungsschraube nach einem etwa dem Seildurchmesser entsprechenden Stellweg das Seil aus der Abspannklemme fällt.

Der im Anspruch 1 angegebenen Erfindung liegt die Aufgabe zugrunde, demgegenüber eine Verbesserung zu schaffen, insbesondere eine Seilklemme der eingangs genannten Gattung anzugeben mit der die Montage und das Nachjustieren weiter vereinfacht werden kann. Diese aufgabe wrid durch die Merkmalkombination des anspruchs 1 gelöst.

Die erfindungsgemäß vorgestellte Seilklemme ermöglicht ein sehr einfaches und schnelles Montieren und Justieren. Die Verbindung von Klemmkörper und Klemmdeckel ist vorzugsweise als Schraubverbindung ausgeführt. Diese braucht sowohl zum Einhängen des Seils als auch zur Justierung der Seilklemme am Seil nur teilweise gelöst zu werden, die Teile selbst brauchen nicht entfernt zu werden. Vorteilhafterweise ist die Schraubverbindung mit nur einer einzigen Schraube ausgeführt, wobei im Klemmkörper zweckmäßigerweise eine Führungsnut vorgesehen ist. Der Klemmdeckel braucht lediglich eine Gewindebohrung für das Einschrauben einer entsprechenden Schraube aufzuweisen. Ein Gegenhalten von Muttern ist demnach nicht mehr erforderlich.

Eine besonders sichere Klemmung des Seils in der Seilklemme wird erreicht, wenn die Klemmschale im Klemmbereich wellenoder S-förmig ausgebildet ist. Die Klemmschale und/oder das entsprechende Klemmgegenstück enthalten dem Seil zugewandt mehrere zahnähnliche Erhebungen, die vorteilhafterweise gegeneinander versetzt angeordnet sind, wodurch eine besonders sichere Klemmverbindung geschaffen wird. Mit nur einer einzigen Schraube kann damit eine sehr hohe Klemmwirkung erreicht werden.

Besonders vorteilhaft ist es, wenn der Klemmdeckel auf beiden Seiten ein Klemmgegenstück aufweist, wobei die eine Seite für einen bestimmten Seilquerschnitt oder Seilquerschnittsbereich und die andere Seite für einen anderen Seilquerschnitt bzw. Seilquerschnittsbereich ausgelegt ist. Damit lassen sich bei geringster Lagerhaltung unterschiedliche Seile mit unterschiedlichen Querschnitten sicher und schonend klemmen. Um eine eindeutige Zuordnung zu erzielen, enthält der Klemmdekkel mindestens ein Markierungsfeld für eine Kennzeichnung der unterschiedlichen Seilquerschnitte der zu klemmenden Seile.

Eine besonders leichte Montage, vor allen Dingen ein leichtes Nachjustieren der Seilklemme am Seil, läßt sich erreichen, wenn, wie gemäß einer vorteilhaften Ausgestaltung der Erfindung vorgeschlagen wird, der Klemmkörper beidseitig angeordnete bügelförmige Arme aufweist, die mit hakenförmig das Seil an seiner Oberseite umgreifenden Führungselementen versehen sind. Die Führungselemente sind in bezug auf die Klemmschale parallel seitlich versetzt angeordnet, wodurch auch bei verschiedenen Seilquerschnitten eine sichere Führung und Halterung des Seils erzielt und nach Lösen der Schraubverbindung ein Abfallen der Seilklemme vom Seil verhindert wird. Die bügelförmigen Arme sind vorteilhafterweise so gestaltet, daß sie zusammen mit dem Seil beidseitig geschlossene Ösen bilden, an denen Zugseile oder dergleichen über Haken, Ringe, Schlaufen, oder dergleichen, befestigt werden können.

Ein Ausführungsbeispiel der Erfindung wird nachfolgend anhand der Zeichnung näher erläutert. Es zeigen:
- FIG 1: eine als Richtseilösenklemme ausgebildete Seilklemme in schaubildlicher Darstellung, in einer Freigabeposition,
- FIG 2: den Klemmkörper und den dazugehörigen Klemmdeckel im Längsschnitt im Bereich der Schraubverbindung in einer Klemmposition.

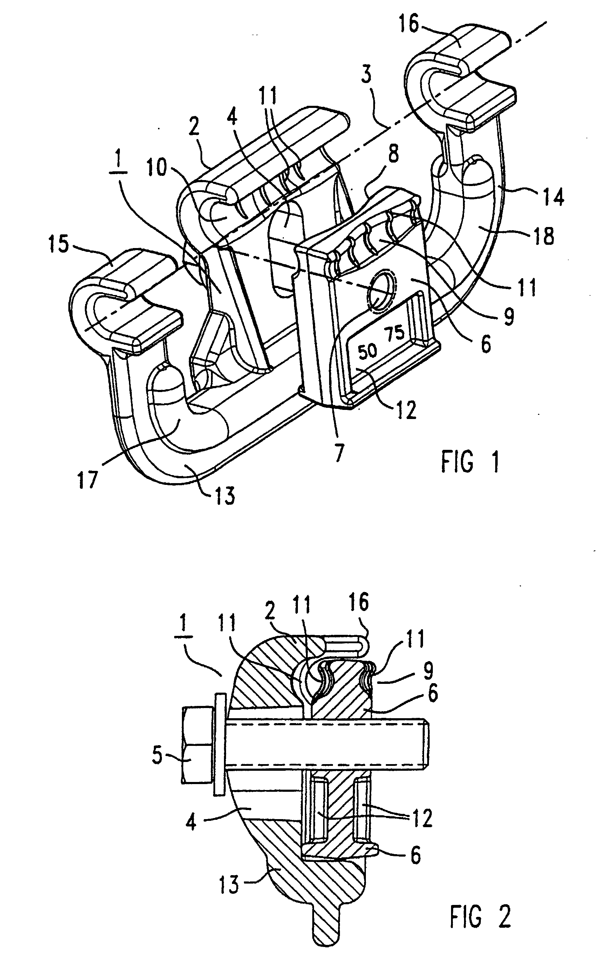

Die FIG 1 zeigt die komplette Seilklemme in schaubildlicher Darstellung, und zwar in einer Position, die das Ein- bzw. Abhängen der Klemme vom Seil gewährleistet. Die Seilklemme umfaßt einen Klemmkörper 1 mit einer hakenförmig ausgebildeten Klemmschale 2, welche ein durch gestrichelte Linien angedeutetes Seil 3 teilweise umgreift. Der Klemmkörper 1 enthält in seinem Mittelteil ein Langloch 4, durch das eine Klemmschraube 5 hindurchragt. Korrespondierend zum Klemmkörper 1 ist ein Klemmdeckel 6 vorgesehen, der mittig eine Gewindebohrung 7 für die Klemmschraube 5 und oben beidseitig Klemmgegenstücke 8 und 9 aufweist.

Die Klemmschale 2 weist einen wellen- oder S-förmig gebogenen, im wesentlichen dem Seilquerschnitt angepaßten Seilkanal 10 auf, der mit einer Vielzahl von zahnähnlichen Erhebungen 11 versehen ist. Die mit dem Seilkanal 10 zusammenwirkende Kontur im Klemmgegenstück 8 ist entsprechend ausgeführt, wobei die dort befindlichen Erhebungen gegenüber denen im Seilkanal der Klemmschale versetzt angeordnet sind. Ebenso ist die auf der anderen Seite des Klemmdeckels befindliche Kontur des Klemmgegenstückes 9 ausgeführt. Die Konturen der Klemmgegenstücke 8 und 9 sind bezüglich des aufzunehmenden Seilquerschnittes unterschiedlich. Die eine Kontur kann für Seile von beispielsweise 25 bis 35 mm², die Kontur des Klemmgegenstükkes 9 beispielsweise für Seile von 50 bis 75 mm² ausgebildet sein. Je nach Montageerfordernis kann die eine oder andere Seite des Klemmdeckels verwendet werden. Zur leichteren Erkennbarkeit ist im unteren Teil des Klemmdeckels 6 ein Kennzeichnungsfeld für entsprechende Markierungen (hier mit dem angegebenen Querschnittsbereich der zu klemmenden Seile 50 bis 75). Ein entsprechendes Kennzeichnungsfeld für die vorgenannten anderen Seilquerschnitte ist zweckmäßigerweise auf der Rückseite des Klemmdeckels vorhanden.

Der Klemmkörper 1 ist beidseitig mit bügelförmigen Armen 13, 14 versehen, die an ihren Enden ebenfalls hakenförmig gebogene Führungselemente 15, 16 aufweisen. Die Führungselemente 15, 16 sind in bezug auf die Längsachse der Klemmschale parallel seitlich dazu versetzt angeordnet und so ausgebildet, daß sie das Seil 3 teilweise umgreifen, zumindest so weit, daß, wenn die Seilklemme am Seil eingehängt ist, sie selbst bei gelöstem Klemmdeckel gegen Herabfallen gesichert ist.

Die Schnittdarstellung in FIG 2 zeigt die Seilklemme (ohne Seil) in montiertem Zustand, und zwar im Bereich der Schraubverbindung.

Die Montage ist sehr einfach. Ausgehend von der in FIG 2 gezeigten Klemmposition läßt sich bei gelockerter Klemmschraube 5 die Schraube mit dem Klemmdeckel 6 in der Langlochführung 4 in die in FIG 1 gezeigte Position nach unten verschieben. In dieser Stellung ist das Einhängen der Klemmen am Seil möglich. Ist das Seil in die Seilführungen eingelegt, braucht lediglich der Klemmdeckel 6 mit der Klemmschraube 5 angehoben und so weit festgezogen zu werden, bis der Klemmdeckel mit der Führung am Seil anliegt. In dieser Position läßt sich die Seilklemme auf dem Seil immer noch leicht verschieben. Wenn die gewünschte Position erreicht ist, zieht man die Klemmschraube 5 fest an und die Seilklemme ist sodann auf dem Seil mit der erforderlichen Festigkeit fixiert. Beim Festziehen der Schraube wird das gespannte Seil zuerst in die haken- bzw. C- förmig ausgebildeten Führungselemente 15, 16 der Arme 13, 14, gedrückt, bevor es mitteld des Klemmdeckels in der Klemmschale 2 des Klemmkörpers 1 geklemmt wird.

Im montierten Zustand bilden die beiden bügelartigen Arme 13 und 14 zusammen mit dem Seil 3 beidseitig Ösen, an denen über Haken, Kauschen, Zugseile oder dergleichen eingehängt werden können. Die beiden Arme sind hierzu auf beiden Seiten mit wulstartigen Verstärkungen 17, 18 versehen.

In Abwandlung der beschriebenen Ausführung umfaßt die vorliegende Erfindung auch eine Version, bei der Klemmkörper und Klemmdeckel keine Langlochführung aufweisen. Der Klemmkörper ist hierbei jedoch mit mindestens einem, vorzugsweise mit zwei bügelförmigen Armen versehen, die eine entsprechende Seilführung aufweisen. Wenngleich die lösbare Verbindung vorteilhafterweise als Schraubverbindung ausgeführt ist, so können alternativ auch andere lösbare Verbindungselemente eingesetzt werden, z. B. Klemmverbindungen.

Auch hinsichtlich der Gestaltung des Klemmdeckels und des Klemmgegenstückes sind verschiedene Varianten denkbar, die im Rahmen der Erfindung liegen. So können die Konturen, die die Klemmgegenstücke bilden, nicht nur, wie dargestellt, an der oberen Seite des Klemmdeckels angeordnet sein, bei entsprechend angepaßter Gestaltung des Deckels können diese auch an den anderen Seiten vorhanden sein. Der Klemmdeckel kann so für eine Vielzahl unterschiedlicher Seildurchmesser und/oder auch zum Klemmen mit unterschiedlichen Klemmkräften eingesetzt werden.

Als weitere, ebenfalls im Rahmen der Erfindung liegende Variante wird eine Anordnung der Führungselemente 15, 16 gesehen, bei der eines der Führungselemente 15, 16, oder auch beide, gegenüber der dargestellten Ausführung um 180° gedreht angeordnet sind.

## Patentansprüche

1. Seilklemme, insbesondere Richtseil- oder Tragseilklemme für Tragwerke von Oberleitungen elektrischer Bahnen, mit einem Klemmkörper (1), der eine hakenförmig ausgebildete, das Seil (3) teilweise umgreifende Klemmschale (2)aufweist, und einen mit dem Klemmkörper (1) lösbar verbundenen Klemmdeckel (6), der ein mit der Klemmschale (2) zusammenwirkendes Klemmgegenstück (8, 9) aufweist, wobei Verbindungselemente (5, 7) den Klemmkörper (1) und den Klemmdeckel (6) verbinden und in einer im wesentlichen quer zur Seilführung verlaufenden Führung (4) angebracht sind, so dass sich der Klemmkörper (1) und der Klemmdeckel (6) zwischen einer Position, in der das Seil (3) festklemmbar ist, indem sie sich aneinanderdrücken lassen, und einer das Seil freigebenden Position verstellen lassen, **dadurch gekennzeichnet, dass** der Klemmkörper (1) zumindest an einer Seite, vorzugsweise beidseitig, einen bügelförmigen Arm (13, 14) aufweist, der mit einer Führung (15, 16) für das zu klemmende Seil (3) versehen ist.

2. Seilklemme nach Anspruch 1, **dadurch gekennzeichnet, daß** Klemmkörper (1) und Klemmdeckel (6) durch eine Schraubverbindung mit einer einzigen Klemmschraube (5) miteinander verbunden sind, wobei der Klemmkörper (1) die quer zur Seilführung verlaufende Führung (4) und der Klemmdeckel (6) eine Gewindebohrung (7) für die Klemmschraube (5) enthält.

3. Seilklemme nach Anspruch 1 oder 2, **dadurch gekennzeichnet, daß** zumindest die Klemmschale (2) im Klemmbereich wellenförmig ausgebildet ist.

4. Seilklemme nach einem der Ansprüche 1 bis 3, **dadurch gekennzeichnet, daß** Klemmschale (2) und/oder Klemmgegenstück (8, 9), dem Seil (3) zugewandt, mehrere die Klemmwirkung verstärkende Erhebungen (11) aufweist.

5. Seilklemme nach Anspruch 4, **dadurch gekennzeichnet, daß** die Erhebungen (11) an Klemmschale (2) und/oder Klemmgegenstück (8, 9) vorgesehen und gegeneinander versetzt angeordnet sind.

6. Seilklemme nach einem der Ansprüche 1 bis 5, **dadurch gekennzeichnet, daß** der Klemmdeckel (6) auf Vorder- und Rückseite ein Klemmgegenstück (8, 9) aufweist.

7. Seilklemme nach einem der Ansprüche 1 bis 6, **dadurch gekennzeichnet, daß** die Klemmgegenstücke (8, 9) unterschiedlichen Seilquerschnitten angepaßte Konturen aufweisen.

8. Seilklemme nach einem der Ansprüche 1 bis 7, **dadurch gekennzeichnet, daß** der Klemmdeckel (6) zumindest ein Kennzeichnungsfeld (12) für eine Kennung des mit dem betreffenden Klemmgegenstück (8, 9) zu klemmenden Seiles enthält.

9. Seilklemme nach einem der Ansprüche 1 bis 8, **dadurch gekennzeichnet, daß** die Führung für das Seil (3) hakenförmige Elemente (15, 16) enthält, die im eingehängten Zustand das Seil (3) teilweise umgreifen.

10. Seilklemme nach Anspruch 1, **dadurch gekennzeichnet, daß** die bügelförmigen Arme (13, 14) so gestaltet sind, daß sie zusammen mit dem Seil (3) nach der Montage geschlossene Ösen bilden.

11. Seilklemme nach Anspruch 10, **dadurch gekennzeichnet, daß** die Arme (13, 14) mit Versteifungswülsten (17, 18) versehen sind.

## Claims

1. Cable clamp, particularly cross-span adjuster clamp or bearer cable clamp for supports of overhead lines of electric railways, with a clamping body (1) which has a clamping shell (2), fashioned in the form of a hook, which partially encompasses the cable (3), and a clamping cover (6), detachably joined to the clamping body (1), which has a clamping counter-piece (8,9) which acts together with the clamping shell (2), joining elements (5, 7) joining the clamping body (1) and the clamping cover (6) and being located in a guide (4) running substantially transversely relative to the cable guide, so that the clamping body (1) and the clamping cover (6) are adjustable between a position in which the cable (3) can be fixedly clamped, in that they permit pressing on one another, and a position releasing the cable, **characterized in that** the clamping body (1) has at least on one side, preferably on both sides, a bow-type arm (13, 14) which is provided with a guide (15, 16) for the cable (3) to be clamped.

2. Cable clamp according to claim 1, **characterized in that** the clamping body (1) and clamping cover (6) are joined to one another by a screwed joint with a single clamping screw (5), the clamping body (1) including the guide (4) running transversely relative to the cable guide, and the clamping cover (6) including a tapped hole (7) for the clamping screw (5).

3. Cable clamp according to either of claims 1 or 2, **characterized in that** at least the clamping shell (2) is waved in the clamping area.

4. Cable clamp according to any one of claims 1 to 3, **characterized in that** the clamping shell (2) and/or clamping counter-piece (8, 9), facing towards the cable (3), has several elevations (11) which reinforce the clamping effect.

5. Cable clamp according to claim 4, **characterized in that** the elevations (11) are provided on the clamping shell (2) and/or clamping counter-piece (8,9) and are offset relative to one another.

6. Cable clamp according to any one of claims 1 to 5, **characterized in that** the clamping cover (6) has a clamping counter-piece (8,9) on the front and back side.

7. Cable clamp according to any one of claims 1 to 6, **characterized in that** the clamping counter-pieces (8, 9) have contours adapted to different cable cross-sections.

8. Cable clamp according to any one of claims 1 to 7, **characterized in that** the clamping cover (6) includes at least one identification section (12) for an identification of the cable to be clamped with the respective clamping counter-piece (8, 9).

9. Cable clamp according to any one of claims 1 to 8, **characterized in that** the guide for the cable (3) includes hook-type elements (15, 16) which, in the hung state, partially encompass the cable (3).

10. Cable clamp according to claim 1, **characterized in that** the bow-type arms (13, 14) are formed so that, together with the cable (3), they form closed eyes following mounting.

11. Cable clamp according to claim 10, **characterized in that** the arms (13, 14) are provided with reinforcing beads (17, 18).

## Revendications

1. Pince de câble, notamment pince de câble directeur ou de câble porteur pour système porteur de caténaire de voies électriques, comprenant un corps (1) de pince qui comporte une coquille (2) de pince qui est constituée en forme de crochet, qui entoure en partie le câble (3) et qui a un couvercle (6) de pince, relié de manière amovible au corps (1) de pince et ayant une pièce (8, 9) antagoniste de pince coopérant avec la coquille (2) de pince, des éléments (5, 7) de liaison rellant le corps (1) de pince et le couvercle (6) de pince et étant ménagés suivant un guidage s'étendant sensiblement tranversalement au guidage du câble de façon à ce que le corps (1) de pince et le couvercle (6) de pince puissent se déplacer entre une position dans laquelle le câble (3) peut être fixé en les faisant se rapprocher l'un de l'autre et une position libérant le câble, **caractérisé en ce que** le corps (1) de pince a, au moins d'un côté, de préférence des deux côtés, un bras (13, 14) en forme d'étrier, qui est muni d'un guidage (15, 16) pour le câble (3) à serrer.

2. Pince de câble suivant la revendication 1, **caractérisée en ce que** le corps (1) de pince et le couvercle (6) de pince sont assemblés entre eux par un vissage ayant une vis (5) unique de serrage, le corps (1) de pince comportant le guidage (4) s'étendant transversalement au guidage du câble et le couvercle (6) de pince comportant un taraudage (7) pour la vis (5) de serrage.

3. Pince de câble suivant la revendication 1 ou 2, **caractérisée en ce qu'**au moins la coquille (2) de pince est de forme ondulée dans la partie de serrage.

4. Pince de câble suivant l'une des revendications 1 à 3, **caractérisée en ce que** la coquille (2) de pince et/ou la pièce (8, 9) antagoniste de pince, qui est tournée vers le câble (3), a plusieurs surélévations (11) renforçant l'effet de serrage.

5. Pince de câble suivant l'une des revendications 1 à 4, **caractérisée en ce que** les surélévations (11) sont prévues en étant mutuellement décalées sur la coquille (2) de pince et/ou sur la pièce (8, 9) antagoniste de pince.

6. Pince de câble suivant l'une des revendications 1 à 5, **caractérisés en ce que** le couverde (6) de pince a une pièce (8, 9) antagoniste de pince sur la face avant et sur la face arrière.

7. Pince de câble suivant l'une des revendications 1 à 6, **caractérisée en ce que** la pièce (8, 9) antagoniste de pince a des contours adaptés à des sections transversales différentes de câble.

8. Pince de câble suivant l'une des revendications 1 à 7, **caractérisée en ce que** le couvercle (6) de pince comporte au moins un champ (12) de caractérisation pour une caractérisation du câble à serrer par la pièce (8, 9) antagoniste de pince concernée.

9. Pinoe de câble suivant l'une des revendications 1 à 8, **caractérisée en ce que** le guidage du câble (3) comporte des éléments (15, 16) en forme de crochets qui, à l'état accroché, entourent en partie le câble (3).

10. Pinoe de câble suivant l'une des revendications 1 à 9, **caractérisée en ce que** les bras (13, 14) en forme d'étrier sont conformés de manière à former, ensemble avec le câble (3) après le montage, des oeillets fermés.

11. Pince de câble suivant l'une revendications 1 à 10, **caractérisée en ce que** les bras (13, 14) sont munis de bourrelets (18) de renfort.
